# EUROPEAN PATENT APPLICATION

(11) **EP 4 660 208 A1**
(43) Date of publication of application: **10.12.2025**
(21) Application number: 24767350.2
(22) Date of filing: 29.02.2024
(51) Int. Cl.: C08F 110/06, C08F 4/6592, C08F 4/646, C08F 2/44, C08F 2/38, C08L 23/12, D01F 6/06

(54) **POLYPROPYLENE RESIN COMPOSITION AND POLYPROPYLENE FIBER PREPARED USING SAME**

(30) Priority: 03.03.2023 KR 20230028621; 28.02.2024 KR 20240029138
(71) Applicant: LG CHEM, LTD., Seoul 07336 (KR)
(72) Inventor: CHAE, Seong Min, Daejeon 34122 (KR); YE, Jihwa, Daejeon 34122 (KR); PARK, Mirim, Daejeon 34122 (KR); PARK, Heekwang, Daejeon 34122 (KR); HONG, Sung Yong, Daejeon 34122 (KR); LEE, Hongcheol, Daejeon 34122 (KR)
(74) Representative: Hoffmann Eitle
(86) International application number: PCT/KR2024/002652
(87) International publication number: WO 2024/186061

(57) **Abstract**

Provided are a polypropylene resin composition, which has a melt index, a melting point, and a crystallization temperature all optimized along with a narrow molecular weight distribution by using a polypropylene resin, which is prepared in the presence of a metallocene compound having a specific structure, and a molecular weight modifier in a predetermined range, thereby being suitable for ultra-low basis weight, high-stiffness nonwoven fabrics, and a polypropylene fiber manufactured therefrom.

## Description

### [TECHNICAL FIELD]

### CROSS-REFERENCE TO RELATED APPLICATION(S)

The present application is based on, and claims priority from, Korean Patent Application Nos. 10-2023-0028621 and 10-2024-0029138, filed on March 3, 2023 and February 28, 2024, respectively, the disclosures of which are hereby incorporated by reference herein in their entirety.

The present disclosure relates to a polypropylene resin composition suitable for an ultra-low basis weight, high-stiffness nonwoven fabric, and a polypropylene fiber prepared therefrom.

### [BACKGROUND]

Generally, a nonwoven fabric refers to a fabric made by bonding or interlocking fibrous aggregates by mechanical and chemical treatments such as mechanical operation or thermal bonding without passing through spinning, weaving, or knitting processes. The nonwoven fabric includes a felt, a resin bonded nonwoven fabric, a needle punched nonwoven fabric, a spun bonded nonwoven fabric, a spunlace nonwoven fabric, an embossed film, a wet nonwoven fabric, or the like. In the narrow sense, it means being used as interlacing fabrics or the like by bonding a contact point between randomly stacked webs and fibers by a resin. The nonwoven fabric is called an adhesive cloth and is also called a bonded fabric. These nonwoven fabrics can be produced by various methods, and a needle punching method, a chemical bonding method, a thermal bonding method, a melt blowing method, a spunlace method, a stitch-bonding method, and a spunbond method are known.

A spunbond nonwoven fabric using a polyolefin-based resin as a raw material is excellent in touch feeling, flexibility, air permeability, heat insulation, etc., and thus is widely used for filters, packaging materials, bedding, clothes, medical supplies, sanitary articles, automobile interior materials, building materials, etc. In particular, polypropylene staple fibers are processed into a thermal bonded nonwoven fabric through a calender bonding method or an air through bonding method because of its inherent low melting point and excellent chemical resistance, and they are mainly used as surface materials for sanitary articles such as diapers and sanitary napkins.

Meanwhile, due to recent eco-friendly trends, there is a growing demand for reducing the amount of plastic used in diapers, etc., and the need for improving tenacity is increasing to reduce the weight of spun bonded nonwoven fabric in diaper construction. Therefore, metallocene catalyst-based homopolypropylene products are being applied to existing spun bonded nonwoven fabrics in order to improve tenacity.

In general, catalyst systems mainly used in polypropylene polymerization can be classified into Ziegler-Natta and metallocene catalyst systems, and these two highly active catalyst systems have been developed in accordance with their characteristics. Ziegler-Natta catalysts have been widely applied to the existing commercial processes since they were developed in the 1950s. However, since the Ziegler-Natta catalyst is a multi-active site catalyst in which a plurality of active sites are mixed, it has a feature that a polymer has a broad molecular weight distribution, and since a compositional distribution of comonomers is not uniform, there is a problem that it is difficult to obtain desired physical properties.

Further, metallocene catalysts consist of a main catalyst having a transition metal compound as a main component and an organometallic compound cocatalyst having aluminum as a main component. Such catalysts are single site catalysts which are homogeneous complex catalysts, and offer a polymer having a narrow molecular weight distribution and a uniform compositional distribution of comonomers, due to the single site characteristics. The stereoregularity, copolymerization characteristics, molecular weight, crystallinity, etc. of the polymer may be controlled by changing a ligand structure of the catalyst and polymerization conditions.

In the case of a polypropylene resin, which is mainly used in the manufacture of spun bonded nonwoven fabrics, the tenacity of filaments is usually determined by orientation and degree of crystallization of the polypropylene polymer chain. In the case of a homopolypropylene resin, the tenacity of spun bonded nonwoven fabrics may generally increase according to an increase in their weight average molecular weight.

However, as the molecular weight of the homopolypropylene resin increases, the risk of single yarns during spinning increases due to phenomena such as melt fracture and draw resonance, making it difficult to secure stable processability during spinning.

In particular, in order to further improve the tenacity of the polypropylene resin for manufacturing an ultra-low basis weight, high-stiffness nonwoven fabric according to recent trends, as compared to products to which the traditional technology is applied, the molecular weight distribution must be further narrowed, but there is a limitation in improving the level due to limitations in the catalyst technology. Therefore, it is impossible to improve the fiber tenacity compared to the current level.

Accordingly, it is required to develop a polypropylene resin composition and fiber suitable for an ultra-low basis weight, high-stiffness nonwoven fabrics, which are able to reduce the use of plastic in diapers, etc. in accordance with recent environmental issues.

### [DETAILED DESCRIPTION OF THE INVENTION]

### [Technical Problem]

There is provided a polypropylene resin composition, wherein a melt index, a melting point, and a crystallization temperature are all optimized along with a narrow molecular weight distribution by controlling a polypropylene which is prepared in the presence of a metallocene compound having a specific structure and a molecular weight modifier in a predetermined range.

In another embodiment of the present disclosure, there is provided a process for preparing the above-described polypropylene resin composition.

In further another embodiment of the present disclosure, there are provided a fiber and a spun bonded nonwoven fabric manufactured using the above-described polypropylene resin composition.

### [Technical Solution]

According to one embodiment of the present disclosure, there is provided a polypropylene resin composition, wherein a molecular weight distribution (Mw/Mn) is 1.7 or more to 2.35 or less, a melt index (MI_{2.16}, measured at 230 °C under a load of 2.16 kg) is 18 g/10min or more to 36 g/10min or less, a melting point (Tm) is 135 °C or higher, and a crystallization temperature (Tc) is 115 °C or lower.

According to other embodiment of the present disclosure, there is also provided a process for preparing the above-described polypropylene resin composition.

According to another embodiment of the present disclosure, there are also provided a polypropylene fiber and a spun bonded nonwoven fabric, each including the above-described polypropylene resin composition.

### [ADVANTAGEOUS EFFECTS]

In a polypropylene resin composition according to the present disclosure, a melt index, a melting point, and a crystallization temperature are all optimized along with a narrow molecular weight distribution, by using a polypropylene which is prepared in the presence of a metallocene compound having a specific structure and a molecular weight modifier in a predetermined range. Thus, the polypropylene resin composition is advantageous in manufacturing a spun bonded nonwoven fabric having high tenacity along with ultra-low basis weight characteristics to minimize the weight when applied in diapers, etc.

### [DETAILED DESCRIPTION OF THE EMBODIMENTS]

In this disclosure, the terminology used herein is for the purpose of describing exemplary embodiments only and is not intended to be limiting of the invention.

The singular expression may include the plural expression unless it is differently expressed contextually.

In this disclosure, it must be understood that the terminology "include", "equip", or "have" in the present description is only used for designating the existence of characteristics taken effect, numbers, steps, components, or combinations thereof, and do not exclude the existence or the possibility of addition of one or more different characteristics, numbers, steps, components, or combinations thereof beforehand.

In this disclosure, when a layer or an element is mentioned to be formed "on" or "above" layers or elements, it means that each layer or element is directly formed on the layers or elements, or other layers or elements may be additionally formed between the layers, or on subjects or substrates.

The present invention may be variously modified and have various forms, and specific exemplary embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a polypropylene resin composition according to specific embodiments of the present disclosure, and a preparation method thereof, and a fiber including the same are described in more detail.

### Polypropylene Resin Composition

According to one embodiment of the present disclosure, provided is a polypropylene resin composition being characterized by satisfying all the requirements, in which a molecular weight distribution (Mw/Mn) is 1.7 or more to 2.35 or less, a melt index (MI_{2.16}, measured at 230 °C under a load of 2.16 kg) is 18 g/10min or more to 36 g/10min or less, a melting point (Tm) is 135°C or higher, and a crystallization temperature (Tc) is 115°C or lower.

In the present disclosure, when a polypropylene resin composition is prepared, which is useful in the manufacture of a fiber, particularly, a high-tenacity yarn suitable for an ultra-low basis weight, high-stiffness nonwoven fabrics, capable of reducing the use of plastic in diapers, etc. in accordance with recent environmental issues, a polypropylene prepared in the presence of a metallocene compound having a specific structure and a molecular weight modifier are used in a predetermined range. Thus, the resin composition having physical properties of being all optimized in a melt index, a melting point, and a crystallization temperature, along with a narrow molecular weight distribution, may remarkably increase a draw ratio during fiber processing, thereby exhibiting high tenacity and excellent processability to be suitable for ultra-low basis weight, high-stiffness nonwoven fabrics that are able to reduce the use of plastics in diapers, etc. in accordance with recent environmental issues.

Specifically, the polypropylene resin composition has a molecular weight distribution (Mw/Mn, MWD) of 1.7 or more to 2.35 or less. More specifically, the molecular weight distribution (Mw/Mn, MWD) of the polypropylene resin composition is 1.75 or more, or 1.78 or more, or 1.8 or more, or 1.82 or more, or 1.85 or more, or 1.88 or more, or 1.9 or more, or 1.92 or more, or 1.95 or more, and 2.34 or less, or 2.33 or less, or 2.32 or less, or 2.31 or less, or 2.3 or less, or 2.28 or less. The polypropylene resin composition has a narrow molecular weight distribution of 2.35 or less, thereby having the increased stiffness and exhibiting excellent mechanical properties when manufacturing fiber products for multifilament or spun bond. In addition, when the polypropylene resin composition has a too low molecular weight distribution of less than 1.7, a problem of deterioration in processability may occur due to poor spinning during fiber manufacturing.

In one embodiment of the present disclosure, the molecular weight distribution is obtained by measuring a weight average molecular weight (Mw) and a number average molecular weight (Mn) of the polypropylene resin composition using gel permeation chromatography (GPC), respectively and calculating the ratio (Mw/Mn) of the weight average molecular weight to the number average molecular weight.

Specifically, Waters' PL-GPC220 may be used as the gel permeation chromatography (GPC) instrument, and a Polymer Laboratories PLgel MIX-B 300 mm-length column may be used. The measurement temperature is 160°C, and 1,2,4-trichlorobenzene may be used as a solvent and applied at a flow rate of 1 mL/min. Each polypropylene sample may be pretreated by dissolving in 1,2,4-trichlorobenzene containing 0.0125% of BHT at 160 °C for 10 hours using a GPC analyzer (PL-GP220), and the sample was prepared at a concentration of 10 mg/10 mL and supplied in an amount of 200 µL. Mw and Mn values may be obtained using a calibration curve formed using polystyrene standard specimens. 9 kinds of the polystyrene standard specimens are used, each having a molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol, respectively.

Further, the polypropylene resin composition may have a weight average molecular weight of 150000 g/mol or more, or 150000 g/mol to 230000 g/mol. Specifically, the weight average molecular weight of the polypropylene resin composition may be 155000 g/mol or more, or 160000 g/mol or more, or 165000 g/mol or more, or 170000 g/mol or more, and 225000 g/mol or less, or 220000 g/mol or less, or 215000 g/mol or less, or 210000 g/mol or less.

Meanwhile, the polypropylene resin composition exhibits an optimized melt index along with the narrow molecular weight distribution (MWD), thereby being used in manufacturing fibers suitable for spun bonded nonwoven fabrics having high-stiffness along with ultra-low basis weight characteristics to minimize the content relative to the application volume, when applied in diapers, etc.

Specifically, the polypropylene resin composition has a melt index (MI_{2.16}, measured at 230°C under a load of 2.16 kg) of 18 g/10min or more to 36 g/10min or less, as measured at 230°C under a load of 2.16 kg in accordance with the American Society for Testing and Materials standard ASTM D 1238. More specifically, the melt index (MI_{2.16}) of the polypropylene resin composition may be 19 g/10min or more, or 20 g/10min or more, or 22 g/10min or more, or 24 g/10min or more, or 25 g/10min or more, or 28 g/10min or more, and 35.5 g/10min or less, or 35 g/10min or less, or 34.5 g/10min or less, or 34 g/10min or less, or 33.5 g/10min or less, or 33 g/10min or less, or 32.5 g/10min or less, or 32 g/10min or less. Here, in terms of providing high tenacity during fiber manufacturing, the melt index (MI_{2.16}) of the polypropylene resin composition should be 18 g/10min or more. However, when the melt index (MI_{2.16}) of the polypropylene resin composition becomes too high by exceeding 36 g/10min, the viscosity and molecular weight of the resin composition may decrease, which may cause a problem of deteriorating the tenacity during fiber manufacturing.

For example, the polypropylene resin composition may have a melt index (MI_{2.16}, measured at 230°C under a load of 2.16 kg) of 22 g/10min or more to 27 g/10min or less, or 23.5 g/10min or more to 26.5 g/10min or less, or 24 g/10min or more to 25 g/10min or less, and a molecular weight distribution (Mw/Mn) of 1.85 or more to 2.35 or less, or 1.88 or more to 2.34 or less, or 1.9 or more to 2.33 or less. Further, the polypropylene resin composition may have a melt index (MI_{2.16}, measured at 230 °C under a load of 2.16 kg) of 30 g/10min or more to 36 g/10min or less, or 32 g/10min or more to 35.5 g/10min or less, or 33 g/10min or more to 35 g/10min or less, and a molecular weight distribution (Mw/Mn) of 1.7 or more to 2.3 or less, or 1.75 or more to 2.28 or less, or 1.85 or more to 2.26 or less.

Meanwhile, the polypropylene resin composition has the optimized molecular weight distribution (MWD) and melt index, and at the same time, has both the melting point (Tm) and the crystallization temperature (Tc) in the optimal range, as described above, thereby manufacturing fibers suitable for spun bonded nonwoven fabrics with high tenacity along with the ultra-low basis weight characteristics that enable minimizing the use of plastics when applied in diapers, etc.

Specifically, the polypropylene resin composition has a melting point (Tm) of 135 °C or higher, or 135 °C or higher to 155 °C, and a crystallization temperature (Tc) of 115 °C or lower, or 95 °C or higher to 115 °C or lower.

More specifically, the melting point (Tm) of the polypropylene resin composition may be 136 °C or higher, or 138 °C or higher, or 140 °C or higher, or 142 °C or higher, or 145 °C or higher, or 148 °C or higher, or 150 °C or higher, and 154.5 °C or lower, or 154 °C or lower, or 153.5 °C or lower, or 153 °C or lower, or 152.5 °C or lower, or 152 °C or lower. In particular, in terms of securing excellent mechanical properties such as high tenacity and excellent heat resistance during fiber manufacturing, the melting point (Tm) of the polypropylene resin composition should be 135 °C or higher.

In addition, the polypropylene resin composition may have a crystallization temperature (Tc) of 113.5 °C or lower, or 113 °C or lower, or 112.5 °C or lower, or 112 °C or lower, 111.5 °C or lower, or 111 °C or lower, or 111.5 °C or lower, or 110 °C or lower, and 96 °C or higher, or 98 °C or higher, or 100 °C or higher, or 102 °C or higher, or 105 °C or higher. In particular, in terms of preventing a rapid increase in viscosity and spinning defects due to excessive solidification of the spinning filament during fiber manufacturing, the crystallization temperature (Tc) of the polypropylene resin composition should be 115 °C or lower.

In one embodiment of the present disclosure, the melting point (Tm) and the crystallization temperature (Tc) are measured using a differential scanning calorimeter (DSC, e.g., device name: DSC 2920, manufacturer: TA instrument). Specifically, the temperature is raised to heat the polypropylene polymer to 200°C, and then maintained at that temperature for 5 minutes. Then, the temperature is lowered to 30°C, and when the temperature is again raised, the temperature corresponding to the peak of the DSC (Differential Scanning Calorimeter, manufactured by TA) curve is determined as the melting point (Tm). Thereafter, when the temperature is again lowered to 30 °C, the peak of the curve is determined as the crystallization temperature (Tc). At this time, the heating and cooling rate is 10 °C/min, and the melting point (Tm) and the crystallization temperature (Tc) are represented by the results measured in the second heating and cooling cycle.

As described above, the polypropylene resin composition of the present disclosure has excellent process stability and processability along with high stiffness, as compared to the existing Ziegler-Natta catalyst-applied polypropylene or the traditional metallocene catalyst-applied homopolypropylene, propylene copolymer, polybutene, etc., and at the same time, may obtain characteristics suitable for ultra-low basis weight, high-stiffness nonwoven fabrics, which are able to reduce the use of plastic in diapers, etc. in accordance with recent environmental issues.

In the resin composition of the present disclosure, one or more additives, such as antioxidants, lubricants, UV stabilizers, neutralizers, dispersants, weathering agents, antistatic agents, UV stabilizers, slip agents, anti-blocking agents, talc, nucleating agents, etc., may be used within the range that does not impair the properties of the resin composition. More specifically, one or more selected from the group consisting of antioxidants, lubricants, ultraviolet stabilizers, and neutralizers may be further used as the additive.

### Process for Preparing Polypropylene Resin Composition

Meanwhile, according to another embodiment of the present disclosure, provided is a process for preparing the polypropylene resin composition having the physical properties as described above.

In the present disclosure, the process for preparing the polypropylene resin composition includes the steps of preparing a polypropylene resin by polymerizing propylene monomers in the presence of a catalyst composition including one or more of metallocene compound represented by the following Chemical Formula 1 and hydrogen gas; and performing melt extrusion of a mixture including the polypropylene resin and a molecular weight modifier under condition of 120 °C or higher to 300 °C or lower, wherein the molecular weight modifier is included in an amount of 210 ppm to 940 ppm based on the weight of the polypropylene resin. 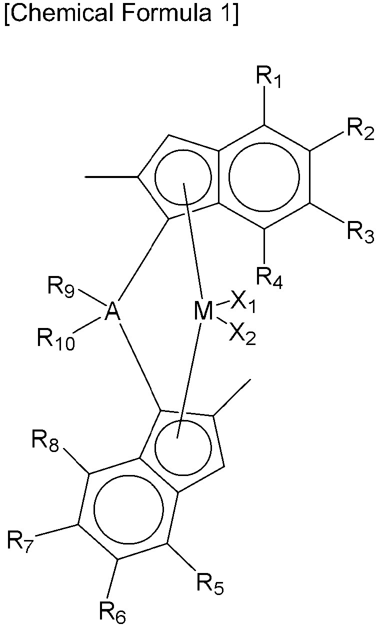 in Chemical Formula 1,
A is carbon, silicon, or germanium,
M is zirconium, or hafnium,
X₁ and X₂ are each independently halogen,
R₁ and R₅ are each independently C₆₋₂₀ aryl substituted with C₁₋₂₀ alkyl,
R₂ to R₄ and R₆ to R₈ are each independently hydrogen, halogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ ether, C₁₋₂₀ silylether, C₁₋₂₀ alkoxy, C₆₋₂₀ aryl, C₇₋₂₀ alkylaryl, or C₇₋₂₀ arylalkyl,
R₉ is C₁₋₂₀ alkyl unsubstituted or substituted with C₁₋₂₀ alkoxy, and
R₁₀ is C₁₋₂₀ alkyl or C₂₋₂₀ alkenyl.

Unless otherwise specified herein, the following terms are defined as follows.

The halogen is fluorine (F), chlorine (CI), bromine (Br), or iodine (I).

The alkyl having 1 to 20 carbon atoms, i.e., C₁₋₂₀ alkyl, is linear, branched, or cyclic alkyl. Specifically, the alkyl having 1 to 20 carbon atoms is linear alkyl having 1 to 20 carbon atoms; linear alkyl having 1 to 15 carbon atoms; linear alkyl having 1 to 5 carbon atoms; branched or cyclic alkyl having 3 to 20 carbon atoms; branched or cyclic alkyl having 3 to 15 carbon atoms; or branched or cyclic alkyl having 3 to 10 carbon atoms. For example, the alkyl having 1 to 20 carbon atoms (C₁₋₂₀) may be methyl, ethyl, propyl, isopropyl, n-butyl, tert-butyl, pentyl, hexyl, heptyl, octyl, cyclopropyl, cyclobutyl, cyclopentyl, cyclohexyl, cycloheptyl, cyclooctyl, etc., but is not limited thereto.

The alkenyl having 2 to 20 carbon atoms, i.e., C₂₋₂₀ alkenyl, is linear or branched alkenyl, and specifically, may include allyl, ethenyl, propenyl, butenyl, pentenyl, etc., but is not limited thereto.

The alkoxy having 1 to 20 carbon atoms, i.e., C₁₋₂₀ alkoxy, may include methoxy, ethoxy, isopropoxy, n-butoxy, tert-butoxy, phenyloxy, cyclohexyloxy, etc., but is not limited thereto.

The alkoxyalkyl having 2 to 20 carbon atoms, i.e., C₂₋₂₀ alkoxyalkyl, is a functional group in which one or more hydrogens of the alkyl as described above are substituted with alkoxy, and specifically, may include alkoxyalkyl such as methoxymethyl, methoxyethyl, ethoxymethyl, iso-propoxymethyl, iso-propoxyethyl, iso-propoxypropyl, iso-propoxyhexyl, tert-butoxymethyl, tert-butoxyethyl, tert-butoxypropyl, tert-butoxyhexyl, etc., but is not limited thereto. Aryloxyalkyl may include phenoxyhexyl, etc., but is not limited thereto.

The alkylsilyl having 1 to 20 carbon atoms, i.e., C₁₋₂₀ alkylsilyl, or the alkoxysilyl having 1 to 20 carbon atoms (C₁₋₂₀ alkoxysilyl) is a functional group in which one to three hydrogens of -SiH₃ are substituted with one to three of the alkyl or alkoxy as described above, and specifically, may include alkylsilyl such as methylsilyl, dimethylsilyl, trimethylsilyl, dimethylethylsilyl, diethylmethylsilyl, or dimethylpropylsilyl, etc.; alkoxysilyl such as methoxysilyl, dimethoxysilyl, trimethoxysilyl, or dimethoxyethoxysilyl, etc., but is not limited thereto. Alkoxyalkylsilyl may include methoxydimethylsilyl, diethoxymethylsilyl, or dimethoxypropylsilyl, etc., but is not limited thereto.

The silylalkyl having 1 to 20 carbon atoms, i.e., C₁₋₂₀ silylalkyl, is a functional group in which one or more hydrogens of the alkyl as described above are substituted with silyl, and specifically, may include -CH₂-Si(CH₃), methylsilylmethyl, or dimethylethoxysilylpropyl, etc., but is not limited thereto.

Further, the alkylene having 1 to 20 carbon atoms, i.e., C₁₋₂₀ alkylene, is the same as the above-described alkyl, except that it is a divalent substituent, and specifically, may include methylene, ethylene, propylene, butylene, pentylene, hexylene, heptylene, octylene, cyclopropylene, cyclobutylene, cyclopentylene, cyclohexylene, cycloheptylene, cyclooctylene, etc., but is not limited thereto.

The aryl having 6 to 20 carbon atoms, i.e., C₆₋₂₀ aryl, refers to monocyclic, bicyclic, or tricyclic aromatic hydrocarbon. For example, the aryl may include phenyl, biphenyl, naphthyl, anthracenyl, phenanthrenyl, fluorenyl, etc., but is not limited thereto.

The alkylaryl having 7 to 20 carbon atoms, i.e., C₇₋₂₀ alkylaryl, refers to a substituent in which one or more hydrogens of aryl are substituted with the above-described alkyl. For example, the alkylaryl may include methylphenyl, ethylphenyl, methylbiphenyl, methylnaphthyl, etc., but is not limited thereto.

Further, the arylalkyl having 7 to 20 carbon atoms, i.e., C₇₋₂₀ arylalkyl, refers to a substituent in which one or more hydrogens of the above-described alkyl are substituted with the above-described aryl. For example, the arylalkyl may include phenylmethyl, phenylethyl, biphenylmethyl, naphthylmethyl, etc., but is not limited thereto.

Further, the arylene having 6 to 20 carbon atoms, i.e., C₆₋₂₀ arylene, is the same as the above-mentioned aryl, except that it is a divalent substituent, and specifically, may include phenylene, biphenylene, naphthylene, anthracenylene, phenanthrenylene, fluorenylene, etc., but is not limited thereto.

Further, the Group 4 transition metal includes titanium (Ti), zirconium (Zr), hafnium (Hf), or rutherfordium (Rf), specifically, titanium (Ti), zirconium (Zr), or hafnium (Hf), and more specifically, zirconium (Zr) or hafnium (Hf), but is not limited thereto.

Further, the Group 13 element includes boron (B), aluminum (Al), gallium (Ga), indium (In), or thallium (TI), and specifically, boron (B) or aluminum (Al), but is not limited thereto.

The above-described substituents may be optionally substituted with one or more substituents selected from the group consisting of a hydroxyl group; halogen; alkyl; alkenyl; aryl; alkoxy; alkyl, alkenyl, aryl, or alkoxy containing one or more of the heteroatoms of Group 14 to Group 16, silyl, alkylsilyl, or alkoxysilyl; a phosphine group; a phosphide group; a sulfonate group; and a sulfone group within the range of achieving the same to similar effect as the desired effect.

The catalyst composition used in preparing the polypropylene resin composition according to one embodiment of the present disclosure is characterized by including the metallocene compound represented by Chemical Formula 1. In particular, when a metallocene catalyst with a specific substituent in a bridge group connecting two ligands including indenyl groups is used, it is possible to prepare a polypropylene in which a melt index, a melting point, and a crystallization temperature, along with a molecular weight distribution, are all optimized to meet the desired physical properties.

In one embodiment, since the compound of Chemical Formula 1 includes a divalent functional group A disubstituted with the same alkyl groups having two or more carbon atoms as the bridge group connecting two ligands including indenyl groups, the atomic size increases and the available angle increases, and thus access of monomers becomes easy, resulting in more excellent catalytic activity.

Further, two indenyl groups which are ligands in the compound of Chemical Formula 1 are respectively substituted with a methyl group at position 2 thereof, and respectively include an aryl group substituted with alkyl at position 4 thereof (i.e., R₁ and R₅), thereby exhibiting more excellent catalytic activity by an inductive effect of supplying sufficient electrons.

More specifically, in Chemical Formula 1, R₁ and R₅ may be each independently C₆₋₁₂ aryl substituted with C₁₋₁₀ alkyl, and further more specifically, phenyl substituted with C₃₋₆ branched alkyl such as tert-butyl phenyl. In particular, the alkyl substitution position to the phenyl may be a position 4 corresponding to a para position to the position of R₁ and R₅ bound to indenyl.

For example, R₁ and R₅ are phenyl substituted with tert-butyl. More preferably, R₁ and R₅ are 4-tert-butyl-phenyl.

Further, in Chemical Formula 1, R₂ to R₄ and R₆ to R₈ may be each independently hydrogen, and X₁ and X₂ may be each independently chlorine (CI).

Further, in Chemical Formula 1, A may be silicon (Si). Further, in terms of improving the supporting efficiency by increasing solubility, R₉ and R₁₀, which are substituents of A, R₉ may be C₁₋₁₀ alkyl unsubstituted or substituted with C₃₋₆ alkoxy, and R₁₀ may be C₁₋₁₀ alkyl. Specifically, R₉ may be 6-tert-butoxy-hexyl, R₁₀ may be methyl, or both R₉ and R₁₀ may be ethyl.

Further, in Chemical Formula 1, M may be zirconium (Zr). In particular, when the compound of Chemical Formula 1 includes zirconium (Zr) as a central metal, it has more orbitals capable of accepting electrons, as compared to those containing another Group 4 element such as hafnium (Hf), etc. Thus, it is able to bind to monomers with higher affinity, as a result, exhibiting much improved catalytic activity.

Further, the metallocene compound may be specifically, for example, any one of compounds having the following structural formulae:

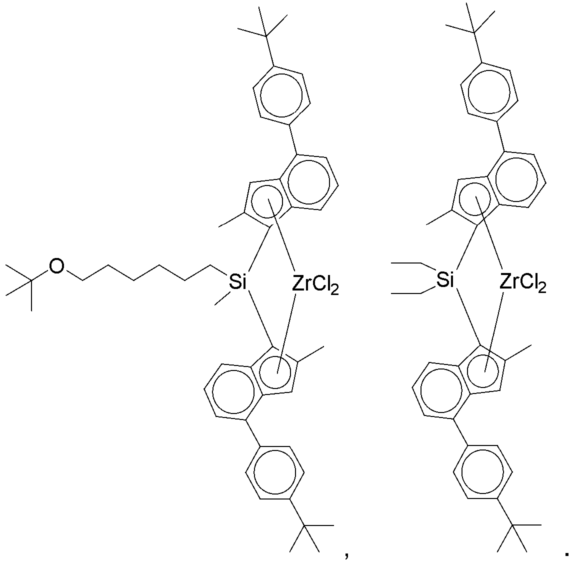

The compounds having the above structural formulae are only examples for explaining the present disclosure, and the present disclosure is not limited thereto.

Further, the metallocene compound represented by Chemical Formula 1 may be prepared by a known method of synthesizing organic compounds, and will be described in more detail in Example described later.

Meanwhile, in this specification, the equivalent weight (eq) refers to a molar equivalent (eq/mol) with regard to the process for preparing the metallocene compound or catalyst composition which is used for preparing the polypropylene resin according to one embodiment of the present disclosure.

In the catalyst composition which is used in the preparation of the polypropylene resin composition according to one embodiment of the present disclosure, the metallocene compound of Chemical Formula 1 may be used in the form of a supported catalyst, in which it is supported on a support, or in the form of a non-supported catalyst. In particular, in terms of securing stability of the polymerization process of using the catalyst composition and uniform control of physical properties, the metallocene compound is more preferably used in the form of a supported catalyst.

As the support, a support containing highly reactive hydroxyl groups or siloxane groups on its surface may be used. Preferably, a support containing highly reactive hydroxyl groups and siloxane groups, which are dried at a high temperature to remove moisture on the surface, may be used.

For example, silica, silica-alumina, silica-magnesia, etc. dried at a high temperature may be used, and may commonly include oxide, carbonate, sulfate, and nitrate components, such as Na₂O, K₂CO₃, BaSO₄, and Mg(NO₃)₂, etc.

The drying temperature of the support is preferably about 200 °C to about 800 °C, more preferably, about 300 °C to about 600 °C, and most preferably, about 300 °C to about 400 °C. When the drying temperature of the support is lower than about 200 °C, too much moisture remains and the moisture on the surface may react with a cocatalyst. When the drying temperature is higher than about 800 °C, pores on the surface of the support may combine with each other to reduce surface area, and many hydroxyl groups may be lost from the surface, leaving only siloxane groups. Thus, reactive sites with the cocatalyst may be reduced, which is not preferred.

For example, the amount of the hydroxyl groups on the support surface is preferably about 0.1 mmol/g to about 10 mmol/g, and more preferably about 0.5 mmol/g to about 5 mmol/g. The amount of the hydroxyl groups on the support surface may be controlled by a preparation method and conditions of the support, or drying conditions, e.g., temperature, time, vacuum or spray drying, etc. When the amount of hydroxyl groups is less than about 0.1 mmol/g, reactive sites with the cocatalyst may be reduced. When the amount of hydroxyl groups is more than about 10 mmol/g, it may be caused by moisture besides the hydroxyl groups present on the surface of support particles, which is not preferred.

When the metallocene compound of Chemical Formula 1 is supported on the support, a weight ratio of the total transition metal included in the metallocene compound represented by Chemical Formula 1 to the support may be about 1:1 to about 1:1000. When the support and the metallocene compound are included at the above weight ratio, appropriate activity of the supported catalyst may be exhibited, which may be advantageous in terms of maintaining the catalytic activity and economic feasibility. More specifically, the weight ratio of the compound of Chemical Formula 1 to the support may be 1:10 to 1:30, and much more specifically 1:15 to 1:20.

In addition to the metallocene compound of Chemical Formula 1 and the support, the catalyst composition may further include a cocatalyst in terms of high activity and process stability improvement.

Specifically, the cocatalyst may include one or more of compounds represented by the following Chemical Formula 2:

[Chemical Formula 2] -[Al(R²¹)-O]ₘ-

in Chemical Formula 2,
R²¹'s are the same as or different from each other, and each independently halogen, C₁₋₂₀ alkyl, or C₁₋₂₀ haloalkyl; and
m is an integer of 2 or more.

Examples of the compound represented by Chemical Formula 2 may include aluminoxane-based compounds, such as methylaluminoxane, ethylaluminoxane, isobutylaluminoxane, butylaluminoxane, etc., and any one or a mixture of two or more thereof may be used.

Further, the cocatalyst may include one or more of compounds represented by the following Chemical Formula 3:

[Chemical Formula 3] J(R³¹)₃

in Chemical Formula 3,
R³¹'s are the same as or different from each other, and each independently halogen, C₁₋₂₀ alkyl or C₁₋₂₀ haloalkyl; and
J is aluminum or boron.

Examples of the compound represented by Chemical Formula 3 may include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, etc., and more specifically, selected from trimethylaluminum, triethylaluminum, or triisobutylaluminum.

Further, the cocatalyst may include one or more of compounds represented by the following Chemical Formula 4:

[Chemical Formula 4] [E-H]⁺[ZQ₄]⁻

in Chemical Formula 4,
E is a neutral or cationic Lewis base;
H is a hydrogen atom;
Z is a Group 13 element; and
Q's are the same as or different from each other, and each independently C₆₋₂₀ aryl or C₁₋₂₀ alkyl, wherein C₆₋₂₀ aryl or C₁₋₂₀ alkyl is unsubstituted or substituted with one or more substituents selected from the group consisting of halogen, C₁₋₂₀ alkyl, C₁₋₂₀ alkoxy, and C₆₋₂₀ aryloxy.

Specifically, in Chemical Formula 4, E may be amine including one or more nitrogen atoms, wherein the amine may be substituted with C₆₋₂₀ aryl or C₁₋₂₀ alkyl. For example, E may be amine including one or two nitrogen atoms, wherein the amine group may be substituted with two or more of C₆₋₂₀ aryl or C₁₋₂₀ alkyl, or the amine may be substituted with two or three of C₆₋₁₈ aryl or C₆₋₁₂ aryl, or C₁₋₁₂ alkyl, or C₁₋₆ alkyl.

For example, in Chemical Formula 4, [E-H]⁺ may be a Bronsted acid.

Specifically, in Chemical Formula 4, Z may be aluminum or boron.

Specifically, in Chemical Formula 4, Q's may be each independently substituted or unsubstituted C₆₋₁₈ aryl or C₆₋₁₂ aryl, or C₁₋₁₂ alkyl or C₁₋₆ alkyl, as described above.

Examples of the compound represented by Chemical Formula 4 may include triethylammoniumtetraphenylboron, tributylammoniumtetraphenylboron, trimethylammoniumtetraphenylboron, tripropylammoniumtetraphenylboron, trimethylammoniumtetra(p-tolyl)boron, trimethylammoniumtetra(o,p-dimethylphenyl)boron, tributylammoniumtetra(p-trifluoromethylphenyl)boron, trimethylammoniumtetra(p-trifluoromethylphenyl)boron, tributylammoniumtetrapentafluorophenylboron, N,N-diethylaniliniumtetraphenylboron, N,N-diethylaniliniumtetrapentafluorophenylboron, diethylammoniumtetrapentafluorophenylboron, triphenylphosphoniumtetraphenylboron, trimethylphosphoniumtetraphenylboron, triethylammoniumtetraphenylaluminum, tributylammoniumtetraphenylaluminum, trimethylammoniumtetraphenylaluminum, tripropylammoniumtetraphenylaluminum, trimethylammoniumtetra(p-tolyl)aluminum, tripropylammoniumtetra(p-tolyl)aluminum, triethylammoniumtetra(o,p-dimethylphenyl)aluminum, tributylammoniumtetra(p-trifluoromethylphenyl)aluminum, trimethylammoniumtetra(p-trifluoromethylphenyl)aluminum, tributylammoniumtetrapentafluorophenylaluminum, N,N-diethylaniliniumtetraphenylaluminum, N,N-diethylaniliniumtetrapentafluorophenylaluminum, diethylammoniumtetrapentatetraphenylaluminum, triphenylphosphoniumtetraphenylaluminum, trimethylphosphoniumtetraphenylaluminum, tripropylammoniumtetra(p-tolyl)boron, triethylammoniumtetra(o,p-dimethylphenyl)boron, tributylammoniumtetra(p-trifluoromethylphenyl)boron, triphenylcarboniumtetra(p-trifluoromethylphenyl)boron, or triphenylcarboniumtetrapentafluorophenylboron, etc., and among them, any one or a mixture of two or more thereof may be used.

When the cocatalyst is further included, a weight ratio of the metallocene compound of Chemical Formula 1 to the cocatalyst may be about 1:1 to about 1:20. When the cocatalyst and the metallocene compound are included at the above weight ratio, appropriate activity of the supported catalyst may be exhibited, which may be advantageous in terms of maintaining the catalytic activity and economic feasibility. More specifically, the weight ratio of the compound of Chemical Formula 1 to the cocatalyst may be about 1:5 to about 1:20, or about 1:5 to about 1:15.

The cocatalyst may be supported in an amount of about 3 mmol or more, or about 5 mmol or more, and about 20 mmol or less, or about 15 mmol or less, based on the weight of the support, e.g., about 1 g of silica. When included within the above content range, the effect of improving the catalytic activity by use of the cocatalyst may be exhibited.

When the catalyst composition includes all of the support and the cocatalyst, the catalyst composition may be prepared by a preparation method including the steps of supporting the cocatalyst compound on the support, and supporting the compound represented by Chemical Formula 1 on the support. In this regard, the supporting order of the cocatalyst and the metallocene compound of Chemical Formula 1 may be changed, as needed.

In this regard, as a reaction solvent used in the preparation of the catalyst composition, a hydrocarbon solvent such as pentane, hexane, heptane, etc., or an aromatic solvent such as benzene, toluene, etc. may be used.

Meanwhile, the polypropylene resin composition according to one embodiment of the present disclosure may be prepared by a process including the step of preparing the polypropylene resin by polymerizing propylene monomers in the presence of the catalyst composition including one or more of the metallocene compound represented by Chemical Formula 1.

For example, the propylene polymerization reaction may be performed using a single continuous slurry polymerization reactor, loop slurry reactor, gas phase reactor, or solution reactor.

In particular, the polypropylene resin composition according to one embodiment of the present disclosure may be prepared by including the step of homopolymerizing propylene in the presence of one or more of the metallocene compound represented by Chemical Formula 1.

For example, the polypropylene resin composition according to one embodiment of the present disclosure may be prepared by a bulk-slurry process in the presence of the catalyst composition including one or more of the metallocene compound represented by Chemical Formula 1.

In this regard, the polymerization process may be performed in a loop reactor, and for example, a spheripol process reactor including two loop reactors.

Specifically, the polymerization process consists of a reaction system including a plurality of loop reactors. The propylene homopolymer may be produced by continuously polymerizing liquid propylene monomer in the presence of the catalyst and hydrogen gas in the reaction system including a plurality of loop reactors.

The preparation of the polypropylene resin may be performed through a polymerization process in which the propylene monomer is contacted in the presence of hydrogen gas in the presence of the catalyst composition described above.

The hydrogen gas activates the inert site of the metallocene catalyst and causes a chain transfer reaction, thereby controlling the molecular weight. The metallocene compound of the present disclosure has excellent hydrogen reactivity, and therefore, polypropylene having a desired level of molecular weight and melt index may be effectively obtained by controlling the amount of hydrogen gas used during the polymerization process.

The hydrogen gas may be introduced in an amount of 10 ppm to 360 ppm, based on the total number of moles of the propylene monomer. As polymerization is carried out while introducing hydrogen gas in the above amount, it is possible to prepare the polypropylene resin having the optimal range of the weight average molecular weight along with the above-mentioned physical property requirements, particularly, a narrow molecular weight distribution and a low melt index. When the input amount of hydrogen gas is less than 10 ppm, the melt index of the prepared polypropylene resin is greatly lowered, resulting in poor flowability and low discharge property of the final polypropylene resin composition, making the spinning process impossible. On the contrary, when the input amount of hydrogen gas exceeds 360 ppm, the melt index of the polypropylene resin may become excessively high and the fiber stiffness of the final polypropylene resin composition may decrease. More specifically, the hydrogen gas may be introduced in an amount of 30 ppm or more, or 40 ppm or more, or 50 ppm or more, and 300 ppm or less, or 250 ppm or less, or 230 ppm or less, based on the total number of moles of the propylene monomer.

The polymerization process may be performed by a continuous polymerization process, and for example, various polymerization processes known as a polymerization process of olefin monomers, such as a continuous solution polymerization process, a bulk polymerization process, a suspension polymerization process, a slurry polymerization process, or an emulsion polymerization process, etc., may be adopted. Further, the polymerization reaction may be performed by homopolymerizing propylene monomers using one or two continuous slurry polymerization reactors, loop slurry reactors, gas phase reactors, or solution reactors. In particular, a continuous bulk-slurry polymerization process may be preferable in terms of obtaining a uniform molecular weight distribution and commercial production of products.

Further, the polymerization temperature may be 25 °C to 200 °C, preferably 40 °C to 150°C, and more preferably, 60 °C to 100 °C. Further, the polymerization pressure may be 1 kgf/cm² to 100 kgf/cm², preferably 1 kgf/cm² to 80 Kgf/cm², and more preferably, 5 kgf/cm² to 50 kgf/cm². The polymerization is performed under such temperature and pressure, thereby preparing a homopolypropylene with the desired physical properties in a high yield.

Further, the polymerization process may be performed by optionally further introducing one or more of an aluminum-based compound represented by the following Chemical Formula 5 in polymerizing the propylene monomers in the presence of the catalyst composition including one or more of the metallocene compound represented by Chemical Formula 1 and hydrogen gas.

[Chemical Formula 5] Al(R⁵¹)₃

in Chemical Formula 5,
R⁵¹'s are the same as or different from each other, and each independently halogen, C₁₋₂₀ alkyl, or C₁₋₂₀ haloalkyl.

Specifically, examples of the aluminum-based compound represented by Chemical Formula 5 include trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, and dimethylaluminumethoxide, etc., and more specifically, may be one or more, or two or more selected from trimethylaluminum, triethylaluminum, or triisobutylaluminum.

Further, when the aluminum-based compound represented by Chemical Formula 5 is further introduced in the polymerization process, it may be used in an amount of 0.001% by weight or more to 1.2% by weight or less based on the total weight of the propylene monomer. Specifically, the aluminum-based compound represented by Chemical Formula 5 may be introduced in an amount of 0.01% by weight or more, or 0.02% by weight or more, or 0.05% by weight or more, or 0.08% by weight or more, or 0.1% by weight or more, and 1% by weight or less, or 0.8% by weight or less, or 0.5% by weight or less.

In particular, in the preparation of the polypropylene resin by polymerizing propylene monomers, when moisture or impurities exist in the polymerization reactor, a part of the catalyst decomposes. Therefore, since the aluminum-based compound represented by Chemical Formula 5 acts as a scavenger which preliminarily captures moisture or impurities present in the reactor, activity of the catalyst used in the preparation may be maximized, and as a result, a polyethylene resin satisfying the above physical property requirements may be more efficiently prepared. When this aluminum-based compound is not used, moisture or impurities act as catalyst poisons during the polymerization process, and thus the structural characteristics of the catalyst may change, such as reduced activity, etc., and as a result, the desired physical properties may not be satisfied.

Meanwhile, in the present disclosure, after preparing the polypropylene resin by the process as described above, a molecular weight modifier as described below is mixed under optimized conditions, and subjected to melt extrusion, thereby preparing a polypropylene resin composition having high stiffness along with excellent process stability and processability, as compared to the existing Ziegler-Natta catalyst-applied polypropylene or the traditional metallocene catalyst-applied polypropylene resin, i.e., homopolypropylene or propylene copolymer, etc., and at the same time, having characteristics suitable for ultra-low basis weight, high-stiffness nonwoven fabrics, which are able to reduce the use of plastic in diapers, etc. in accordance with recent environmental issues.

Meanwhile, the polypropylene resin may have the molecular weight distribution along with the melt index, melting point, and crystallization temperature in the optimal ranges.

For example, the polypropylene resin may have a molecular weight distribution (Mw/Mn, MWD) of 2.0 or more to 3.0 or less. Specifically, the molecular weight distribution (Mw/Mn, MWD) of the polypropylene resin may be 2.1 or more, or 2.15 or more, or 2.2 or more, or 2.25 or more, or 2.3 or more, or 2.35 or more, or 2.38 or more, or 2.4 or more, or 2.45 or more, and 2.95 or less, or 2.9 or less, or 2.85 or less, or 2.8 or less, or 2.75 or less, or 2.7 or less, or 2.65 or less, or 2.6 or less.

Further, the polypropylene resin may have a high weight average molecular weight while having the optimized molecular weight distribution. Specifically, the weight average molecular weight of the polypropylene resin may be 210000 g/mol or more, or 210000 g/mol to 375000 g/mol. More specifically, the weight average molecular weight of the polypropylene resin may be 220000 g/mol or more, or 230000 g/mol or more, or 240000 g/mol or more, or 250000 g/mol or more, and 370000 g/mol or less, or 360000 g/mol or less, or 355000 g/mol or less, or 350000 g/mol or less.

According to another embodiment of the present disclosure, the molecular weight distribution, the weight average molecular weight (Mw), and the number average molecular weight (Mn) of the polypropylene resin are measured using a gel permeation chromatography (GPC) device, and the detailed measurement method is as described above.

Further, the polypropylene resin may have a melt index (MI_{2.16}, measured at 230 °C under a load of 2.16 kg) of 2 g/10min or more to 11 g/10min or less, as measured at 230°C under a load of 2.16 kg in accordance with the American Society for Testing and Materials standard ASTM D 1238. Specifically, the melt index (MI_{2.16}) of the polypropylene resin may be 2.2 g/10min or more, or 2.5 g/10min or more, or 2.8 g/10min or more, or 3 g/10min or more, or 3.2 g/10min or more, or 3.5 g/10min or more, or 3.8 g/10min or more, or 4 g/10min or more, or 4.3 g/10min or more, or 4.5 g/10min or more, or 4.8 g/10min or more, or 5 g/10min or more, and 10.5 g/10min or less, or 10 g/10min or less, or 9.8 g/10min or less, or 9.5 g/10min or less, or 9.2 g/10min or less, or 9 g/10min or less, or 8.8 g/10min or less, or 8.5 g/10min or less, or 8.2 g/10min or less, or 8 g/10min or less, or 7.8 g/10min or less.

Meanwhile, the polypropylene resin may have optimized melting point (Tm) and crystallization temperature (Tc) along with the molecular weight distribution, and weight average molecular weight, and melt index.

For example, the polypropylene resin may have a melting point (Tm) of 135 °C or higher, or 135 °C or higher to 155 °C, and a crystallization temperature (Tc) of 115 °C or lower, or 95 °C or higher to 115 °C or lower.

Specifically, the melting point (Tm) of the polypropylene resin may be 136 °C or higher, or 138 °C or higher, or 140 °C or higher, or 142 °C or higher, or 145 °C or higher, or 148 °C or higher, or 150 °C or higher, and 154.5 °C or lower, or 154 °C or lower, or 153.5 °C or lower, or 153 °C or lower, or 152.5 °C or lower, or 152 °C or lower. **In** particular, in terms of securing excellent mechanical properties such as high tenacity and excellent heat resistance during fiber manufacturing, the melting point (Tm) of the polypropylene resin may be 135 °C or higher.

**In** addition, the polypropylene resin may have a crystallization temperature (Tc) of 113.5 °C or lower, or 113 °C or lower, or 112.5 °C or lower, or 112 °C or lower, 111.5 °C or lower, or 111 °C or lower, or 111.5 °C or lower, or 110 °C or lower, and 96 °C or higher, or 98 °C or higher, or 100 °C or higher, or 102 °C or higher, or 105 °C or higher. **In** particular, in terms of preventing a rapid increase in viscosity and spinning defects due to excessive solidification of the spinning filament during fiber manufacturing, the crystallization temperature (Tc) of the polypropylene resin may be 115 °C or lower.

According to another embodiment of the present disclosure, the melting point (Tm) and the crystallization temperature (Tc) of the polypropylene resin are measured using a differential scanning calorimeter (DSC, e.g., device name: DSC 2920, manufacturer: TA instrument), and the detailed measurement method is as described above.

Subsequently, the process for preparing the polypropylene resin composition according to one embodiment of the present disclosure includes the step of performing melt extrusion of the mixture including the polypropylene resin prepared through the above-described polymerization process and the molecular weight modifier under condition of 120 °C or higher to 300 °C or lower.

In particular, the polypropylene resin may be mixed with the molecular weight modifier, followed by extrusion and pelletization.

The molecular weight modifier may be a linear non-cyclic organic peroxide compound.

Specifically, the molecular weight modifier may be a non-cyclic organic peroxide compound having 4 to 32 carbon atoms, or 6 to 24 carbon atoms, or 8 to 16 carbon atoms.

For example, the molecular weight modifier may be one or more selected from the group consisting of 2,5-dimethyl-2,5-di-(tert-butylperoxy)hexane (DHBP), 2,5-di(tert-butylperoxy)-2,5-dimethyl-3-hexyne (DYBP), and di-tert-butyl peroxide (DTBP).

Further, the extrusion and pelletization process of the mixture including the polypropylene resin and the molecular weight modifier may be performed according to a common extrusion method in which the temperature for melting the mixed composition is controlled in the range of 120 °C or higher to 300 °C or lower, and a twin screw extruder is used.

In addition, when a pressure is further controlled along with a die temperature, the die pressure may be 20 bar or more, or 30 bar or more, and 50 bar or less, or 35 bar or less. When the pressure is controlled within this range, the shape and physical properties of the polypropylene resin composition may be easily realized.

Meanwhile, the mixture including the polypropylene resin and the molecular weight modifier may further include one or more additives such as antioxidants, lubricants, UV stabilizers, neutralizers, dispersants, weathering agents, antistatic agents, UV stabilizers, slip agents, anti-blocking agents, talc, nucleating agents, etc. More specifically, as the additives, the mixture may further include one or more of antioxidants, lubricants, UV stabilizers, or neutralizers. These additives may be used without limitation as long as they are known to be applicable in the preparation of the polypropylene resin composition, and therefore, detailed descriptions of the types and amounts of the above-mentioned additives are omitted.

However, the optimal combination of physical properties of the polypropylene resin may be achieved through control of the catalyst and polymerization conditions when preparing the polypropylene resin.

The polypropylene resin composition according to one embodiment of the present disclosure, which is prepared by the above-described preparation method, optimizes the melt index with the narrow molecular weight distribution, enabling the production of fibers with a thin thickness and high tenacity, and may be particularly useful in the manufacture of spun bonded nonwoven fabrics having a high tenacity along with ultra-low basis weight properties so as to minimize the weight when used in diapers, etc.

### Polypropylene Fiber and Spun Bonded Nonwoven Fabric

According to still another embodiment of the present disclosure, provided is a polypropylene fiber and a spun bonded nonwoven fabric, each including the polypropylene resin composition described above.

For example, the polypropylene fiber according to the present disclosure may have a tenacity of 6.95 gf/denier or more, as measured in accordance with ASTM D 638.

Further, the spun bonded nonwoven fabric according to the present disclosure may consist of the fiber including the above-described polypropylene resin composition.

The polypropylene fiber of the present disclosure and the spun bonded nonwoven fabric manufactured using the same may be manufactured according to a common method, except that the above-described polypropylene resin composition is used.

Hereinafter, preferred exemplary embodiments will be provided for better understanding of the present invention. However, the following exemplary embodiments are provided only for understanding the present invention more easily, but the content of the present invention is not limited thereby.

### [Examples]

### <Preparation of Metallocene Catalyst>

### Catalyst Preparation Example 1

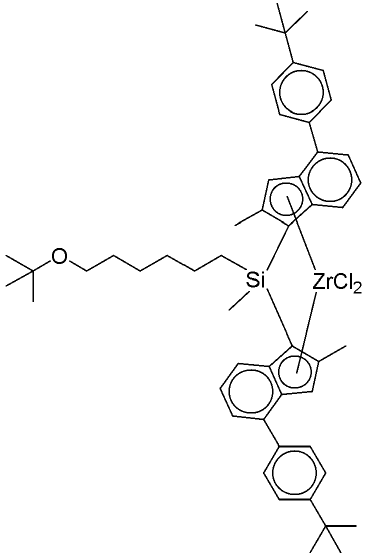

### Step 1) Preparation of (6-t-butoxyhexyl) dichloromethyl silane

100 mL of a t-butoxyhexyl magnesium chloride solution (about 0.14 mol, ether) was slowly added dropwise to 100 mL of a trichloromethylsilane solution (about 0.21 mol, hexane) at -100 °C over 3 hours, followed by stirring at room temperature for 3 hours.

A transparent organic layer was separated from the mixed solution, and then the separated transparent organic layer was dried under vacuum to remove excess trichloromethylsilane. As a result, a transparent liquid (6-t-butoxyhexyl) dichloromethyl silane was obtained (yield 84%).

¹H NMR(500 MHz, CDCl₃, 7.24 ppm): 0.76(3H, s), 1.11(2H, t), 1.18(9H,s), 1.32-1.55(8H, m), 3.33(2H, t).

### Step 2) Preparation of (6-t-butoxyhexyl)(methyl)-bis(2-methyl-4-phenylindenyl) silane

15.4 mL of an n-butyl lithium solution (2.5 M, hexane solvent) was slowly added dropwise to 77 mL of a 2-methyl-4-phenylindene in toluene/THF=10/1 solution (34.9 mmol) at 0 °C, and stirred at 80 °C for 1 hour and then stirred at room temperature for one day. Thereafter, 5 g of (6-t-butoxyhexyl) dichloromethyl silane prepared in the step 1) was slowly added dropwise to the mixed solution at -78 °C, stirred for about 10 minutes, and then stirred at 80 °C for 1 hour. Then, water was added to separate an organic layer, purified using a silica column, and dried under vacuum to obtain a sticky yellow oil with a yield of 78% (racemic:meso = 1:1).

¹H NMR(500 MHz, CDCl₃, 7.24 ppm): 0.10(3H, s), 0.98(2H, t), 1.25(9H, s), 1.36-1.50(8H, m), 1.62(8H, m), 2.26(6H, s), 3.34(2H, t), 3.81(2H, s), 6.87(2H, s), 7.25(2H, t), 7.35(2H, t), 7.45(4H, d), 7.53(4H, t), 7.61(4H, d).

### Step 3) Preparation of [(6-t-butoxyhexylmethylsilane-diyl)-bis(2-methyl-4-phenylindenyl)] zirconium dichloride

An n-butyl lithium solution (2.5 M in hexane) was slowly added dropwise to 50 mL of (6-t-butoxyhexyl)(methyl)-bis(2-methyl-4-phenyl indenyl) silane in ether/hexane = 1/1 solution (3.37 mmol) prepared in the step 2) at -78 °C, and stirred at room temperature for about 2 hours, and then dried under vacuum. Thereafter, the salt was washed with hexane, filtered and dried under vacuum to obtain a yellow solid. Ligand salt synthesized in a glove box and bis(N,N'-diphenyl-1,3-propanediamido)dichloro zirconium bis(tetrahydrofuran) [Zr(C₅H₆NCH₂CH₂CH₂NC₅H₆)Cl₂(C₄H₈O)₂] were weighed in a Schlenk flask, and ether was slowly added dropwise at -78 °C, and stirred at room temperature for one day. Thereafter, the red reaction solution was separated by filtration, and 4 equivalents of a HCl ether solution (1 M) was slowly added dropwise at -78 °C and stirred at room temperature for 3 hours. Then, the solution was filtered and dried under vacuum to obtain an orange solid, ansa-metallocene compound with a yield of 85% (racemic:meso = 10:1).
¹H NMR(500 MHz, C₆D₆, 7.24 ppm): 1.19(9H, s), 1.32(3H, s), 1.48-1.86(10H, m), 2.25(6H, s), 3.37(2H, t), 6.95(2H, s), 7.13(2H, t), 7.36(2H, d), 7.43(6H, t), 7.62(4H, d), 7.67(2H, d)

### Step 4) Preparation of supported catalyst

3 g of silica was weighed in advance in a Shrink flask, and 52 mmol of methylaluminoxane (MAO) was added and reacted at 90 °C for 24 hours. After precipitation, the upper layer was removed, followed by washing twice with toluene. 240 µmol of the ansa-metallocene compound synthesized in the step 3) above dissolved in toluene was added thereto, and reacted at 40 °C for 5 hours. After the reaction was completed and precipitation was completed, the upper solution was removed, and the remaining reaction product was washed with toluene, washed again with hexane, and dried under vacuum to obtain 5 g of silica-supported metallocene catalyst in the form of solid particles.

### Catalyst Preparation Example 2

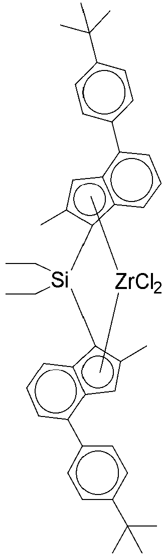

### Step 1) Preparation of (diethylsilane-diyl)-bis((2-methyl-4-tert-butyl-phenylindenyl) silane

2-Methyl-4-tert-butyl-phenylindene (20.0 g) was dissolved in a mixed solvent of toluene and tetrahydrofuran (a volume ratio of toluene/THF = 10/1, 220 mL), and then an n-butyl lithium solution (2.5 M, hexane solvent, 22.2 g) was slowly added dropwise at 0 °C, and then stirred at room temperature for one day. Thereafter, diethyldichlorosilane (6.2 g) was slowly added dropwise to the mixed solution at -78 °C, stirred for about 10 minutes, and then stirred at room temperature for one day. Thereafter, water was added to separate an organic layer, and the solvent was distilled under reduced pressure to obtain (diethylsilane-diyl)-bis((2-methyl-4-tert-butyl-phenylindenyl) silane.

### Step 2) Preparation of [(diethylsilane-diyl)-bis((2-methyl-4-tert-butyl-phenylindenyl)] zirconium dichloride

(Diethylsilane-diyl)-bis((2-methyl-4-tert-butyl-phenylindenyl) silane prepared in the step 1 was dissolved in a mixed solvent (120 mL) of toluene/THF at a volume ratio of 5/1, and an n-butyl lithium solution (2.5 M, hexane solvent, 22.2 g) was slowly added dropwise at -78 °C and stirred at room temperature for a day. Zirconium chloride (8.9 g) was diluted in toluene (20 mL) in the reaction solution, slowly added dropwise at -78 °C and stirred at room temperature for a day. The solvent in the reaction solution was removed under reduced pressure, dichloromethane was added and filtered, and the filtrate was distilled under reduced pressure. Recrystallization was performed using toluene and hexane to obtain high-purity rac-[(diethylsilane-diyl)-bis((2-methyl-4-tert-butyl-phenylindenyl)] zirconium dichloride (10.1 g, yield: 34%, a molar ratio of rac:meso = 20:1).

### Step 3) Preparation of supported catalyst

100 g of silica and 10 wt% methylaluminoxane (670 g) were put in a 3 L reactor and reacted at 90 °C for 24 hours. After precipitation, the upper layer was removed, followed by washing twice with toluene. The ansa-metallocene compound, rac-[(diethylsilane-diyl)-bis((2-methyl-4-tert-butyl-phenylindenyl)] zirconium dichloride (5.8 g) prepared in the step 2 was diluted with toluene and put in the reactor, and reacted at 70 °C for 5 hours. After completion of the reaction and precipitation, the upper solution was removed and the remaining reaction product was washed with toluene, then washed again with hexane and dried under vacuum to obtain 150 g of a silica-supported metallocene catalyst in the form of solid particles.

### Comparative Catalyst Preparation Example 1

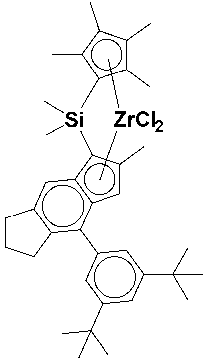

### Step 1) Preparation of ligand compound (2-methyl-4-(3',5'-ditertbutylphenyl)indacenyl) dimethyl (2,3,4,5-tetramethyl cyclopentadienyl) silane

2,3,4,5-tetramethylcyclopentadiene (TMCP) was dissolved in tetrahydrofuran (THF), and then n-butyllithium (n-BuLi, 1.05 eq) was slowly added dropwise at -25 °C, and stirred at room temperature for 3 hours. Thereafter, dichloro dimethyl silane (1.05 eq) was introduced at -10 °C, and stirred at room temperature overnight. In another reactor, 2-methyl-4-(3',5'-ditertbutylphenyl) indacene (1 eq)) was dissolved in a mixed solvent of toluene/tetrahydrofuran (toluene/THF) (a volume ratio of 3/2, 0.5 M), and n-BuLi (1.05 eq) was slowly added dropwise at -25 °C, followed by stirring at room temperature for 3 hours. Thereafter, CuCN (2 mol%) was introduced, and stirred for 30 minutes, and a first reactant mono-Si solution was introduced. Thereafter, the solution was stirred at room temperature overnight, and subjected to work-up using water, and then dried to obtain a ligand.

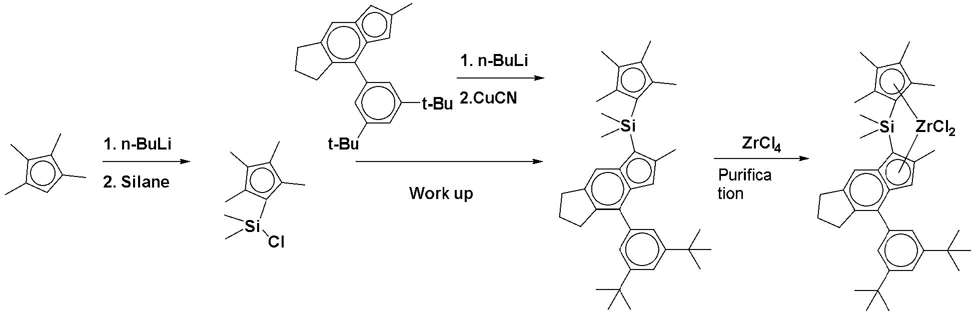

### Step 2) Preparation of transition metal compound dimethylsilanediyl(2-methyl-4-(3',5'-ditertbutylphenyl)Indacenyl)(2,3,4,5-tetramethyl cyclopentadienyl) zirconium dichloride

The ligand prepared above was dissolved in toluene/ether (a volume ratio of 2/1, 0.53 M), and n-BuLi (2.05 eq) was introduced at -25 °C, and stirred at room temperature for 5 hours. A slurry was prepared by mixing ZrCl₄ (1 eq) with toluene (0.17 M) in a separate flask, introduced to the ligand solution, and stirred at room temperature overnight. When the reaction was completed, the solvent was dried under vacuum, dichloromethane was reintroduced to remove LiCl through a filter, etc., and the filtrate was dried under vacuum, and dichloromethane/hexane was added to recrystallize at room temperature. Thereafter, the resulting solid was filtered and dried under vacuum to obtain the title metallocene compound.

NMR data was measured for the transition metal compound thus obtained using Bruker AVANCE III HD 500 MHz NMR/ PABBO(1H/19F/Broad band) probe : 1H, solvent : CDCl₃.
¹H-NMR (500 MHz, CDCl₃): 7.73 (s, 2H), 7.56 (s, 1H), 7.42 (s, 1H), 6.36 (s, 1H), 2.85-2.80 (m, 4H), 2.12 (s, 6H), 1.95 (m, 2H), 1.79 (s, 9H), 1.31 (s, 18H), 1.00 (s, 6H) ppm

### Step 3) Preparation of supported catalyst

100 g of silica and 10 wt% methylaluminoxane (670 g) were put in a 3 L reactor and reacted at 90 °C for 24 hours. After precipitation, the upper layer was removed and washed twice with toluene. The transition metal compound, dimethylsilanediyl(2-methyl-4-(3',5'-ditertbutylphenyl)Indacenyl)(2,3,4,5-tetramethyl cyclopentadienyl) zirconium dichloride (5.8 g) prepared in the step 2 was diluted with toluene, and put in the reactor, and reacted at 70 °C for 5 hours. After completion of the reaction and precipitation, the upper solution was removed and the remaining reaction product was washed with toluene, then washed again with hexane and dried under vacuum to obtain 150 g of silica-supported metallocene catalyst in the form of solid particles.

### <Preparation of Homopolypropylene>

### Preparation Example 1

In the presence of the silica-supported metallocene catalyst prepared according to Catalyst Preparation Example 1, bulk-slurry polymerization of propylene was performed using two consecutive loop reactors.

In detail, triethylaluminum (TEAL) and hydrogen gas were each introduced using a pump, and the silica-supported metallocene catalyst was used in the form of a mud catalyst. The silica-supported metallocene catalyst was mixed with oil and grease to prepare a 20 wt % mixture (in the form of a mud catalyst). Here, the input amount of triethylaluminum (TEAL) was 50 ppm which is a weight value (ppm) based on the total weight of monomers for forming homopolypropylene, and the input amount of hydrogen was 140 ppm which is a molar ratio value (ppm) based on the total number of moles of monomers for forming homopolypropylene. In addition, the reactor was operated at the temperature of 70 °C and at a production rate per hour of about 40 kg/h. At this time, the polymerization pressure was maintained at 35 kg/cm² and propylene was introduced at 40 kg/h.

The results of measuring physical properties for the homopolypropylene of Preparation Example 1 obtained through the bulk-slurry polymerization process of propylene described above are shown in Table 1 below.

### Preparation Example 2

A homopolypropylene of Preparation Example 2 was prepared by performing bulk-slurry polymerization of propylene in the same manner as Preparation Example 1 while changing the input amount of hydrogen to 50 ppm.

### Preparation Example 3

A homopolypropylene of Preparation Example 3 was prepared by performing bulk-slurry polymerization of propylene in the same manner as Preparation Example 1 while changing the input amount of hydrogen to 230 ppm in the presence of the silica-supported metallocene catalyst prepared according to Catalyst Preparation Example 2.

### Preparation Example 4

A homopolypropylene of Preparation Example 4 was prepared by performing bulk-slurry polymerization of propylene in the same manner as Preparation Example 3 while changing the input amount of hydrogen to 100 ppm.

### Comparative Preparation Example 1

A homopolypropylene of Comparative Preparation Example 1 was prepared by performing bulk-slurry polymerization of propylene in the same manner as Preparation Example 1 while changing the input amount of hydrogen to 260 ppm.

### Comparative Preparation Example 2

A homopolypropylene of Comparative Preparation Example 2 was prepared by performing bulk-slurry polymerization of propylene in the same manner as Preparation Example 3 while changing the input amount of hydrogen to 50 ppm.

### Comparative Preparation Example 3

Commercially available H5300^{™} (manufactured by LG Chemical) which is a homopolypropylene prepared using a Ziegler-Natta catalyst (Z/N) was prepared as a homopolypropylene of Comparative Preparation Example 3.

### Comparative Preparation Example 4

A homopolypropylene of Comparative Preparation Example 4 was prepared by performing bulk-slurry polymerization of propylene in the same manner as Comparative Preparation Example 1 while changing the input amount of hydrogen to 380 ppm.

### Comparative Preparation Example 5

A homopolypropylene of Comparative Preparation Example 5 was prepared by performing bulk-slurry polymerization of propylene in the same manner as Preparation Example 1 while performing the polymerization process in the presence of the silica-supported metallocene catalyst prepared according to Comparative Catalyst Preparation Example 1 and changing the input amount of hydrogen to 400 ppm.

### <Experimental Example 1: Evaluation of physical properties of homopolypropylene>

Evaluation of physical properties was performed on the homopolypropylenes of Preparation Examples 1 to 4 and Comparative Preparation Examples 1 to 5 by the following methods, and the measurement results are shown in Table 1 below.

### (1) Melt index

The melt index (MI_{2.16}) was measured at 230 °C under a load of 2.16 kg in accordance with the American Society for Testing and Materials standard ASTM D 1238, and expressed as the weight (g) of the polymer melted out for 10 minutes.

### (2) Weight average molecular weight (Mw) and Molecular weight distribution (MWD, polydispersity index)

The molecular weight distribution (MWD, Mw/Mn) was calculated by measuring the weight average molecular weight (Mw) and the number average molecular weight (Mn) of the homopolypropylenes according to Preparation Examples and Comparative Preparation Examples using a gel permeation chromatography (GPC, manufactured by Waters) and then dividing the weight average molecular weight by the number average molecular weight.

In detail, Waters PL-GPC220 instrument was used as the gel permeation chromatography (GPC) instrument, and a Polymer Laboratories PLgel MIX-B 300 mm-length column was used. At this time, the measurement temperature was 160°C, 1,2,4-trichlorobenzene was used as a solvent, and the flow rate was 1 mL/min. Each homopolypropylene sample according to Preparation Examples and Comparative Preparation Examples was pretreated by dissolving in 1,2,4-trichlorobenzene containing 0.0125% butylated hydroxytoluene (BHT) at 160°C for 10 hours using a GPC analyzer (PL-GP220), prepared at a concentration of 10 mg/10 mL, and then supplied in an amount of 200 µL. The values of Mw and Mn were derived using a calibration curve formed using polystyrene standard specimens. 9 kinds of the polystyrene standard specimens were used, each having a weight average molecular weight of 2000 g/mol, 10000 g/mol, 30000 g/mol, 70000 g/mol, 200000 g/mol, 700000 g/mol, 2000000 g/mol, 4000000 g/mol, 10000000 g/mol.

### (3) Melting point (Tm) and Crystallization temperature (Tc)

The melting point (Tm) and the crystallization temperature (Tc) of the homopolypropylenes according to Preparation Examples and Comparative Preparation Examples were measured using a differential scanning calorimeter (DSC, device name: DSC 2920, manufacturer: TA instrument). In detail, the homopolypropylene was heated to 200°C, and then maintained at that temperature for 5 minutes. The temperature was lowered to 30°C, and then when the temperature was again raised, the temperature corresponding to the peak of the DSC (Differential Scanning Calorimeter, manufactured by TA) curve was determined as the melting point (Tm). Thereafter, when the temperature was again lowered to 30 °C, the peak of the curve was determined as the crystallization temperature (Tc). At this time, the heating and cooling rate was 10 °C/min, and the melting point (Tm) and the crystallization temperature (Tc) are represented by the results measured in the second heating and cooling cycle.

The results of measuring the melt index (MI_{2.16}), and weight average molecular weight (Mw), molecular weight distribution (MWD, Mw/Mn), melting point (Tm) and crystallization temperature(Tc) for the homopolypropylenes of Preparation Examples 1 to 4 and Comparative Preparation Examples 1 to 5 are shown in Table 1 below.

**[Table 1]**

| | Prepar ation Exampl e 1 | Prepar ation Exampl e 2 | Prepar ation Exampl e 3 | Prepar ation Exampl e 4 | Compa rative Prepar ation Exampl e 1 | Compa rative Prepar ation Exampl e 2 | Compa rative Prepar ation Exampl e 3 | Compa rative Prepar ation Exampl e 4 | Compa rative Prepar ation Exampl e 5 |
|---|---|---|---|---|---|---|---|---|---|
| MI (2.16kg, g/10min) | 7 | 3 | 9 | 3 | 12 | 1 | 3 | 25 | 25 |
| Mw (x1000 g/mol) | 280 | 349 | 250 | 340 | 210 | 375 | 340 | 209 | 201 |
| MWD (Mw/Mn) | 2.8 | 2.8 | 2.4 | 2.4 | 2.8 | 2.4 | 3.8 | 2.8 | 2.4 |
| Melting point (Tm, °C) | 151 | 151 | 151 | 151 | 151 | 154 | 160 | 151 | 156 |
| Crystallization temperature (Tc, °C) | 109 | 109 | 109 | 109 | 109 | 110 | 109 | 114 | 118 |

### <Preparation of polypropylene resin composition>

### Example 1

The homopolypropylene of Preparation Example 1, 500 ppm of a phenolic antioxidant Irganox^{™} 1010 (manufactured by BASF) and 1000 ppm of a phosphorus antioxidant Irgafos^{™} 168 (manufactured by BASF) as antioxidants, and 2,5-bis(tert-butylperoxy)-2,5-dimethylhexane (DHBP, (CH₃)₃COOC(CH₃)₂CH₂-CH₂(CH₃)₂COOC(CH₃)₃] as a molecular weight modifier were mixed in the amounts shown in Table 2 below. The mixture thus obtained was reacted and extruded using a 25 mm-twin screw extruder (manufactured by JSW) at temperatures of 230 °C (section of feeding), 270 °C (section of mixing), and 215 °C (section of compression) for each section of feeding, mixing, and compression with a residence time of 25 seconds to produce a masterbatch, which was then pelletized to prepare a pellet-type polypropylene resin composition (mean diameter of the pellet: 4 mm). Meanwhile, the input amounts of the antioxidants and the molecular weight modifier are a weight value (ppm) based on the total weight of the homopolypropylene resin composition.

### Examples 2 to 8

Pellet-type polypropylene resin compositions of Examples 2 to 8 were respectively prepared in the same manner as Example 1, except that the type of homopolypropylene and the content of the molecular weight modifier were changed as shown in Table 2 below.

### Comparative Examples 1 to 6

Pellet-type polypropylene resin compositions of Comparative Examples 1 to 6 were respectively prepared in the same manner as Example 1, except that the type of homopolypropylene and the content of the molecular weight modifier were changed as shown in Table 2 below.

### Comparative Example 7

A commercially available MR2001^{™} (manufactured by Total) was used as a pellet-type polypropylene resin composition including a homopolypropylene prepared using a metallocene catalyst (commercial product 1, MR2001 manufactured by Total).

### Comparative Example 8

A commercially available MH7700S^{™} (manufactured by LG Chemical) was used as a pellet-type polypropylene resin composition including a homopolypropylene prepared using a metallocene catalyst (commercial product 2, MH7700S manufactured by LG Chemical).

### Comparative Example 9

A pellet-type polypropylene resin composition of Comparative Example 9 was prepared in the same manner as Example 1, except that the homopolypropylene of Comparative Preparation Example 4 was used alone and no molecular weight modifier was used, as shown in Table 2 below.

### Comparative Example 10

A pellet-type polypropylene resin composition of Comparative Example 10 was prepared in the same manner as Example 1, except that the homopolypropylene of Comparative Preparation Example 5 was used alone and no molecular weight modifier was used, as shown in Table 2 below.

### Comparative Example 11

A pellet-type polypropylene resin composition of Comparative Example 11 was prepared in the same manner as Example 1, except that a propylene copolymer mixture including a propylene-ethylene random copolymer, a low-crystalline polypropylene resin, and a polyethylene-based resin was used as the polypropylene resin, instead of the homopolypropylene, and the content of the molecular weight modifier was changed to 400 ppm, as shown in Table 2 below.

In detail, the propylene copolymer mixture included 85 parts by weight of the propylene-ethylene random copolymer, 5 parts by weight of the low-crystalline polypropylene resin, and 10 parts by weight of the polyethylene-based resin, based on the total 100 parts by weight of the mixture. Here, as the propylene-ethylene random copolymer, a product (manufactured by LOTTE Chemical) having an ethylene content of 5 mol%, a melt index (measured at 230 °C under a load of 2.16 kg) of 28 g/10min, and a molecular weight distribution (Mw/Mn) of 3.5 was used. As the low-crystalline polypropylene resin, a commercially available low-crystalline polypropylene resin prepared using a metallocene catalyst was used, which is a product (manufactured by Idemitsu) having a [mmmm] value of 40% to 50%, a melt index (measured at 230 °C under a load of 2.16 kg) of 50 g/10min, and a molecular weight distribution (Mw/Mn) of 2.5. As the polyethylene-based resin, an ethylene/1-butene copolymer was used, which is a product (manufactured by LOTTE Chemical) having a 1-butene content of 3 mol%, a density of 0.960 g/cm³, a melt index (measured at 190 °C under a load of 2.16 kg) of 18 g/10 min, and a molecular weight distribution (Mw/Mn) of 5.0.

### <Experimental Example 2: Evaluation of Physical Properties of Polypropylene Resin Composition>

The melting point (Tm), crystallization temperature (Tc), melt index (MI_{2.16}), weight average molecular weight (Mw), and molecular weight distribution (MWD, Mw/Mn) were measured for the polypropylene resin compositions of Examples 1 to 8 and Comparative Examples 1 to 11 in the same manner as Experimental Example 1, respectively and the results are shown in Table 2 below.

**[Table 2]**

| | Polypropylene resin | | Content of molecul ar weight modifier (ppm) | Melting point (Tm, °C) | Crystallizati on temperature (Tc, °C) | MI (2.16kg, g/10min ) | Mw (x1000 g/mol) | MWD (Mw/Mn) |
|---|---|---|---|---|---|---|---|---|
| | Homopolypro pylene | Propylene copolymer mixture | | | | | | |
| Example 1 | Prepar ation Example 1 | - | 350 | 151 | 109 | 25 | 201 | 2.33 |
| Example 2 | Prepar ation Example 1 | - | 570 | 151 | 109 | 34 | 181 | 2.26 |
| Example 3 | Prepar ation Example 2 | - | 700 | 151 | 109 | 25 | 190 | 2.28 |
| Example 4 | Prepar ation Example 2 | - | 900 | 151 | 109 | 34 | 177 | 2.22 |
| Example 5 | Prepar ation Example 3 | - | 225 | 151 | 109 | 25 | 189 | 2.04 |
| Example 6 | Prepar ation Exampl e 3 | - | 390 | 151 | 109 | 34 | 175 | 1.95 |
| Example 7 | Prepar ation Exampl e 4 | - | 650 | 151 | 109 | 25 | 182 | 1.93 |
| Example 8 | Prepar ation Exampl e 4 | - | 900 | 151 | 109 | 34 | 170 | 1.85 |
| Comparative Example 1 | Prepar ation Exampl e 1 | - | 200 | 151 | 109 | 16 | 230 | 2.57 |
| Comparative Example 2 | Prepar ation Exampl e 1 | - | 950 | 151 | 109 | 55 | 149 | 2.19 |
| Comparative Example 3 | Compa rative Prepar ation Exampl e 1 | - | 110 | 151 | 109 | 25 | 209 | 2.6 |
| Comparative Example 4 | Compa rative Prepar ation Exampl e 2 | - | 1300 | 154 | 110 | 25 | 176 | 1.6 |
| Comparative Example 5 | Compa rative Prepar ation Exampl e 3 | - | 750 | 160 | 109 | 25 | 209 | 2.7 |
| Comparative Example 6 | Compa rative Prepar ation Exampl e 3 | - | 980 | 160 | 109 | 34 | 186 | 2.6 |
| Comparative Example 7 | -(comm ercial product 1) | -(commerci al product 1) | -(comme rcial product 1) | 154 | 111 | 25 | 188 | 2.4 |
| Comparative Example 8 | -(comm ercial product 2) | -(commerci al product 2) | -(comme rcial product 2) | 154 | 110 | 25 | 190 | 2.4 |
| Comparative Example 9 | Compa rative Prepar ation Exampl e 4 | - | 0 | 151 | 114 | 25 | 209.5 | 2.8 |
| Comparative Example 10 | Compa rative Prepar ation Exampl e 5 | - | 0 | 156 | 118 | 25 | 201 | 2.4 |
| Comparative Example 11 | - | Mixture containing propylene-ethylene random copolymer | 400 | 151 | 109 | More than 28 | Less than 150 | More than 2.8 |

As shown in Table 2, the polypropylene resin compositions of Examples 1 to 8 were found to achieve a molecular weight distribution (MWD, Mw/Mn) of 1.85 to 2.33, and at the same time, a melt index (MI_{2.16}) of 25 g/10min to 34 g/10min, a melting point (Tm) of 135 °C or higher, and a crystallization temperature (Tc) of 115 °C or lower in the optimal ranges.

In contrast, the polypropylene resin compositions of Comparative Examples 1 to 11 had a wide molecular weight distribution (MWD, Mw/Mn), or an excessively low or high melt index (MI_{2.16}), and an unoptimized melting point (Tm) or crystallization temperature (Tc). In particular, Comparative Example 1 showed a wide molecular weight distribution (MWD, Mw/Mn) of 2.57, and a too low melt index (MI_{2.16}) of 16 g/10min. Comparative Example 2 had a narrow molecular weight distribution (MWD, Mw/Mn) of 2.19 by increasing the use of the molecular weight modifier, whereas it had a high melt index (MI_{2.16}) of 55 g/10min, and a greatly low weight average molecular weight of 149000 g/mol. The polypropylene resin compositions of Comparative Examples 3 to 9 showed a melt index (MI_{2.16}) of 25 g/10min and 34 g/10min, whereas Comparative Example 4 showed a too narrow molecular weight distribution (MWD, Mw/Mn) of 1.6, and Comparative Examples 3 and 5 to 9 showed a too wide molecular weight distribution (MWD, Mw/Mn) of 2.4 to 2.8. In particular, Comparative Example 9 achieved a melt index of 25 g/10min when preparing the polypropylene resin, but maintained a wide molecular weight distribution (MWD, Mw/Mn) of 2.8 without the molecular weight modifier. In contrast, the polypropylene resin composition of Comparative Example 10 achieved a melt index of 25 g/10min when preparing the polypropylene resin, and a molecular weight distribution (MWD, Mw/Mn) of 2.4, but a too high crystallization temperature (Tc) of 118 °C. Further, Comparative Example 11 showed a too wide molecular weight distribution (MWD, Mw/Mn) of more than 2.8 even though the molecular weight modifier was used, and showed a greatly low weight average molecular weight of less than 150000 g/mol.

### <Experimental Example 3: Manufacture of Polypropylene Fiber and Evaluation of Physical Properties>

Fibers were manufactured using the polypropylene resin compositions of Examples and Comparative Examples, and the tenacity and elongation of the manufactured fibers were evaluated.

### Manufacture of fiber

The polypropylene resin compositions prepared in Examples and Comparative Examples were spun using a spin-draw spinning machine, respectively.

In detail, the polypropylene resin composition was introduced into the spinning machine, and the molten resin composition was discharged as a thread from a die, then cooled and solidified by a cooling air current. The resulting undrawn yarn was drawn while passing through first and second rollers, and polypropylene fibers with a fineness of 2 denier (DPF, denier per filament) were manufactured. For reference, denier is an international unit used to indicate the thickness of fiber. 1 denier refers to 1 g of unit weight per a standard length of 9000 m.

In addition, the spinning process was performed using a nozzle diameter of 0.25 pi/24 fila die, and during the spinning, the speed of gear pump was 19 rpm, the discharge amount per hole was 2.5 g/min/hole, the spinning temperature (extrusion temperature) was 230 °C, the pipe temperature was 220 °C, the die temperature was 210 °C, the cooling temperature (quenching air temperature) was about 20 °C, the first roller temperature was 60 °C, the roller speed was 1000 m/min, and the second roller temperature was 120 °C, and the roller speed was 3000 m/min.

### Evaluation of Physical Properties of fiber

Evaluation of physical properties was performed on the polypropylene fibers which were manufactured using the polypropylene resin compositions prepared in Examples and Comparative Examples, and the results are shown in Table 3 below.

### (1) Tenacity of fiber (unit: gf/denier)

Tenacity refers to the breaking tenacity of the yarn, and was measured in accordance with ASTM D 638. At this time, the test speed was 200 mm/min, and each specimen was measured 6 times and the average value was taken. For reference, denier is an international unit used to indicate the thickness of fiber. 1 denier refers to 1 g of unit weight per a standard length of 9000 m.

### (2) Processability of filament

The filament processability was evaluated according to the following criteria, depending on single yarn occurrence of the fiber during filament manufacturing.

In detail, in the evaluation of fiber processability, when no single yarn of the fiber occurred during drawing, it was marked as "good", and when a single yarn of the fiber occurred during drawing, it was marked as "poor".

**[Table 3]**

| | Draw ratio | Tenacity (gf/denier) | Processability |
|---|---|---|---|
| Example 1 | 3.0 | 7.10 | Good |
| Example 2 | 3.0 | 7.03 | Good |
| Example 3 | 3.0 | 7.15 | Good |
| Example 4 | 3.0 | 7.09 | Good |
| Example 5 | 3.0 | 7.25 | Good |
| Example 6 | 3.0 | 7.19 | Good |
| Example 7 | 3.0 | 7.36 | Good |
| Example 8 | 3.0 | 7.30 | Good |
| Comparative Example 1 | 3.0 | - | Poor |
| Comparative Example 2 | 3.0 | 6.05 | Good |
| Comparative Example 3 | 3.0 | - | Poor |
| Comparative Example 4 | 3.0 | - | - |
| | | (not spinnable) | (not spinnable) |
| Comparative Example 5 | 3.0 | - | Poor |
| Comparative Example 6 | 3.0 | - | Poor |
| Comparative Example 7 | 3.0 | 6.80 | Good |
| Comparative Example 8 | 3.0 | 6.78 | Good |
| Comparative Example 9 | 3.0 | - | Poor |
| Comparative Example 10 | 3.0 | - | Poor |
| Comparative Example 11 | 3.0 | - | Poor |

Referring to Table 3, in each of the polypropylene resin compositions according to Examples 1 to 8 of the present disclosure, the propylene homopolymer, which is a polypropylene resin prepared in the presence of the metallocene compound having the specific structure, and the molecular weight modifier were used in a predetermined range, thereby optimizing all the melt index (MI_{2.16}), melting point (Tm), and crystallization temperature (Tc) along with the narrow weight distribution (MWD, Mw/Mn), and therefore, compared to those of Comparative Examples 1 to 11, their draw stability and orientation effect during fiber spinning are superior, which enable stable processability during spinning while improving tenacity, and are advantageous in manufacturing a spun bonded nonwoven fabric having high tenacity along with ultra-low basis weight characteristics to minimize the weight when applied in diapers, etc.

In contrast, with regard to the polypropylene resin compositions of Comparative Examples 1 to 11, the molecular weight distribution (MWD, Mw/Mn) became wide, or the melt index (MI_{2.16}), melting point (Tm), and crystallization temperature (Tc) were all not optimized, and therefore, it was difficult to manufacture fibers with high tenacity suitable for ultra-low basis weight, high-stiffness nonwoven fabrics with stable processability without risk of single yarns during spinning. In particular, Comparative Example 1 showed occurrence of single yarns of fiber during drawing due to the wide molecular weight distribution and the too low melt index and showed the poor spinning processability. Comparative Example 2 showed no occurrence of single yarns of fiber during drawing by optimizing the molecular weight distribution, but its melt index was greatly increased, and fiber tenacity was decreased to 6.05 gf/denier, and therefore, it is difficult to secure a fiber suitable for ultra-low basis weight, high-stiffness nonwoven fabrics. With regard to the polypropylene resin compositions of Comparative Examples 3 to 11, the melt index was controlled in the predetermined range, but the molecular weight distribution was too narrow or too wide, and not optimized, or the crystallization temperature was too high, and it was difficult to manufacture fibers with high tenacity suitable for ultra-low basis weight, high-stiffness nonwoven fabrics without spinning defects. In particular, the polypropylene resin compositions of Comparative Examples 3, 5, 6, and 9 showed spinning defects by occurrence of single yarns of fiber during drawing due to the wide molecular weight distribution. With regard to Comparative Example 4, the spinning was impossible due to the too narrow molecular weight distribution. The polypropylene resin compositions of Comparative Examples 7 and 8 showed no occurrence of single yarns of fiber during drawing by controlling the melt index and also by decreasing the molecular weight distribution in the predetermined range, but the fiber tenacity was merely 6.80 gf/denier and 6.78 gf/denier, indicating that they were not suitable for manufacturing ultra-low basis weight, high-stiffness nonwoven fabrics. The polypropylene resin composition of Comparative Example 10 showed spinning defects by occurrence of single yarns of fiber during drawing by a rapid increase in viscosity due to excessive solidification of fiber filaments due to high crystallization temperature. The polypropylene resin composition of Comparative Example 11 showed spinning defects by occurrence of single yarns of fiber during drawing due to the low viscosity due to the high melt index and the wide molecular weight distribution.

As described, in the polypropylene resin composition according to the present disclosure, the polypropylene resin prepared in the presence of the metallocene compound having the specific structure, and the molecular weight modifier were used in the predetermined range, thereby optimizing all the melt index, melting point, and crystallization temperature along with the narrow weight distribution, and therefore, it is possible to achieve stable processability during spinning while improving tenacity, and to effectively manufacture a polypropylene fiber suitable for ultra-low basis weight, high-stiffness nonwoven fabrics so as to minimize the weight when applied in diapers, etc.

## Claims

1. A polypropylene resin composition having:
a molecular weight distribution (Mw/Mn) of 1.7 or more to 2.35 or less,
a melt index (MI_{2.16}) measured at 230 °C under a load of 2.16 kg of 18 g/10min or more to 36 g/10min or less,
a melting point (Tm) of 135 °C or higher, and
a crystallization temperature (Tc) of 115 °C or lower.

2. The polypropylene resin composition according to Claim 1, which has the molecular weight distribution (Mw/Mn) of 1.85 or more to 2.33 or less.

3. The polypropylene resin composition according to Claim 1, which has a weight average molecular weight of 150000 g/mol or more.

4. The polypropylene resin composition according to Claim 1, which has the melt index (MI_{2.16}) measured at 230 °C under a load of 2.16 kg of 25 g/10min or more to 34 g/10min or less.

5. The polypropylene resin composition according to Claim 1, which has the melting point (Tm) of 135 °C or higher to 155 °C or lower.

6. The polypropylene resin composition according to Claim 1, which has the crystallization temperature (Tc) of 95 °C or higher to 115 °C or lower.

7. The polypropylene resin composition according to Claim 1, which includes a propylene homopolymer.

8. A process for preparing the polypropylene resin composition of Claim 1, the process comprising:
preparing a polypropylene resin by polymerizing propylene monomers in the presence of a catalyst composition including at least one metallocene compound represented by Chemical Formula 1 and hydrogen gas; and
performing melt extrusion of a mixture including the polypropylene resin and a molecular weight modifier under 120 °C or higher to 300 °C or lower,
wherein the molecular weight modifier is included in an amount of 210 ppm to 940 ppm based on a weight of the polypropylene resin: 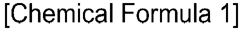 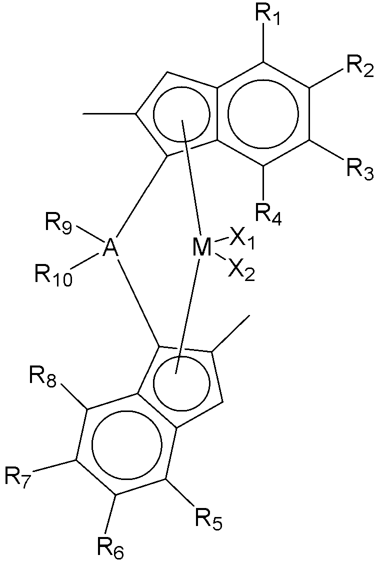
in Chemical Formula 1,
A is carbon, silicon, or germanium,
M is zirconium, or hafnium,
X₁ and X₂ are each independently halogen,
R₁ and R₅ are each independently C₆₋₂₀ aryl substituted with C₁₋₂₀ alkyl,
R₂ to R₄ and R₆ to R₈ are each independently hydrogen, halogen, C₁₋₂₀ alkyl, C₂₋₂₀ alkenyl, C₁₋₂₀ alkylsilyl, C₁₋₂₀ silylalkyl, C₁₋₂₀ alkoxysilyl, C₁₋₂₀ ether, C₁₋₂₀ silylether, C₁₋₂₀ alkoxy, C₆₋₂₀ aryl, C₇₋₂₀ alkylaryl, or C₇₋₂₀ arylalkyl,
R₉ is C₁₋₂₀ alkyl unsubstituted or substituted with C₁₋₂₀ alkoxy, and
R₁₀ is C₁₋₂₀ alkyl or C₂₋₂₀ alkenyl.

9. The process for preparing the polypropylene resin composition according to Claim 8, wherein R₁ and R₅ are each phenyl substituted with tert-butyl.

10. The process for preparing the polypropylene resin composition according to Claim 8, wherein R₉ is 6-tert-butoxy-hexyl, and R₁₀ is methyl, or R₉ and R₁₀ are each ethyl.

11. The process for preparing the polypropylene resin composition according to Claim 8, wherein the polypropylene resin is a propylene homopolymer.

12. The process for preparing the polypropylene resin composition according to Claim 8, wherein the polypropylene resin has a molecular weight distribution (Mw/Mn) of 2.0 or more to 3.0 or less.

13. The process for preparing the polypropylene resin composition according to Claim 8, wherein the polypropylene resin has a melt index (MI_{2.16}) measured at 230 °C under a load of 2.16 kg of 2 g/10min or more to 11 g/10min or less.

14. The process for preparing the polypropylene resin composition according to Claim 8, wherein the polypropylene resin has a melting point (Tm) of 135 °C or higher, and a crystallization temperature (Tc) of 115 °C or lower.

15. The process for preparing the polypropylene resin composition according to Claim 8, wherein the molecular weight modifier is a linear non-cyclic organic peroxide compound.

16. The process for preparing the polypropylene resin composition according to Claim 8, wherein the molecular weight modifier is one or more selected from the group consisting of 2,5-dimethyl-2,5-di-(tert-butylperoxy)hexane, 2,5-di(tert-butylperoxy)-2,5-dimethyl-3-hexyne, and di-tert-butyl peroxide.

17. The process for preparing the polypropylene resin composition according to Claim 8, wherein the mixture further includes one or more of antioxidants, lubricants, UV stabilizers, or neutralizers.

18. A polypropylene fiber comprising the polypropylene resin composition of Claim 1.

19. The polypropylene fiber according to Claim 18, which has a tenacity of 6.95 gf/denier or more, as measured in accordance with ASTM D 638.

20. A spun bonded nonwoven fabric comprising the polypropylene fiber of Claim 18.
